# EUROPEAN PATENT APPLICATION

(11) **EP 4 390 073 A1**
(43) Date of publication of application: **26.06.2024**
(21) Application number: 22215869.3
(22) Date of filing: 22.12.2022
(51) Int. Cl.: F01N 3/28, F01N 3/00, F01N 3/20

(54) **FLUID REACTOR DEVICE AND METHOD FOR OPERATING A FLUID REACTOR DEVICE**

(71) Applicant: MEGTEC Systems AB, 41666 Göteborg (SE)
(72) Inventor: KÄLLSTRAND, Åke, 41656 Göteborg (SE); CARLSSON, Reino, 41666 Göteborg (SE); POULSEN, Martin, 41666 Göteborg (SE)
(74) Representative: 2SPL Patentanwälte PartG mbB

(57) **Abstract**

A fluid reactor device, in particular a fluid purification device, is provided. The fluid reactor device includes a heat-transfer bed comprising a first opening, a second opening and heat storage material arranged between the first opening and the second opening. The heat storage material is configured to heat fluid flowing through the heat storage material such that the fluid heats up and reacts while flowing through the heat storage material. At least one structural or thermal property of at least one of the heat-transfer bed and the heat storage material varies along at least one spatial direction.

## Description

### Field

The present disclosure relates to reaction processing of fluids. In particular, examples of the present disclosure relate to a (regenerative) fluid reactor device, in particular to a (regenerative) fluid purification device, and a method for operating a (regenerative) fluid reactor device.

### Background

Conventional thermal oxidation systems using a heat-transfer bed filled with ceramic material for exhaust gas purification suffer from an asymmetric gas distribution. The asymmetric gas distribution is caused by the varying differential pressure of the incoming gas along the reaction chamber (e.g., due to the geometry of the reaction chamber). This leads to a non-optimal usage of the heat capacity of the heat-transfer bed.

Hence, there may be a demand for improved reaction processing, in particular purification, of fluids such as exhaust gases.

### Summary

The demand may be satisfied by the subject-matter of the appended claims.

According to a first aspect, the present disclosure provides a (regenerative) fluid reactor device, in particular a (regenerative) fluid purification device. The fluid reactor device comprises a heat-transfer bed comprising a first opening, a second opening and heat storage material arranged between the first opening and the second opening. The heat storage material is configured to heat fluid flowing through the heat storage material such that the fluid heats up and reacts while flowing through the heat storage material. At least one structural or thermal property of at least one of the heat-transfer bed and the heat storage material varies along at least one spatial direction.

Varying at least one structural or thermal property of at least one of the heat-transfer bed and the heat storage material along at least one spatial direction allows to more efficiently use the heat stored in the heat-transfer bed. For example, the variation of the at least one property may allow to adjust the heat-transfer bed and/or the heat storage material according to the pressure conditions of the fluid being supplied to the heat-transfer bed. In particular, the variation of the at least one property may allow to adjust (shape) the heat absorption as well as the heat release characteristics of the heat storage material according to the pressure conditions of the fluid being supplied to the heat-transfer bed and the resulting flow directions of the fluid through the heat storage material. Furthermore, the variation of the at least one property may allow to influence the flow behavior (e.g., flow directions) of the fluid through the heat storage material.

It is to be noted that the at least one spatial direction may be any spatial direction such as a thickness direction of the heat storage material/heat-transfer bed (e.g., the thickness direction of the heat storage material/heat-transfer bed may extend from the first opening to the second opening, or vice versa) or a spatial direction at a non-zero angle to the thickness direction. Further, it is to be noted that the at least one property may vary in one, two or more different spatial directions. The variation of the at least one property may be a continuous variation along the at least one spatial direction. Alternatively, the variation of the at least one property may be a local variation along the at least one spatial direction. In other words, the at least one property does not necessarily vary continuously along the at least one spatial direction. Rather, the at least one property may only vary within one or more limited ranges or areas of the at least one spatial direction and remain substantially constant (stable) else. The gradient of the variation may be constant or variable. A structural property of the heat storage material is any property defining (describing) the manner of construction of the heat storage material or its individual parts (particles, elements, units), and/or the arrangement of the individual parts of the heat storage material. A thermal property of the heat storage material is any property defining (describing) the response of the heat storage material to heat. In other words, a thermal property of the heat storage material is any property defining (describing) heat storage material's behavior or characteristics relating to or being caused by heat.

For example, at least one of the following properties may vary along at least one spatial direction: a structure of the heat storage material, a porosity of at least one of the heat-transfer bed and the heat storage material, a geometry of the heat storage material, a topography of the heat storage material, a heat capacity of the heat storage material and a heat transfer capacity of the heat storage material. The structure, the porosity, the geometry and the topography of the heat storage material are examples for structural properties of the heat storage material. The heat capacity and the heat transfer capacity of the heat storage material are examples for thermal properties of the heat storage material. The porosity of the heat transfer bed is an example for a structural property of the heat-transfer bed. The structure of the heat storage material generally defines the way in which heat storage material or individual parts thereof is/are made, built, or organized. The porosity of the heat storage material generally defines the heat storage material's quality or state of being porous. For example, a surface porosity of the heat storage material may vary for increasing/decreasing a contact surface of the heat storage material for the fluid. Alternatively or additionally, a volumetric porosity of the heat storage material may vary for increasing/decreasing the velocity of the fluid. The geometry of the heat storage material defines the arrangement of the individual parts of the heat storage material. The topography of the heat storage material defines the surface shape of the individual parts of the heat storage material. The heat capacity of the heat storage material defines the amount of heat to be supplied to the heat storage material to produce a unit change in its temperature. The heat transfer capacity of the heat storage material defines the amount of heat absorbed or released by the heat storage material per unit temperature change. The porosity of the heat-transfer bed generally defines the heat-transfer bed's quality or state of being porous (i.e., being permeable for the fluid). For example, the porosity of a wall of the heat-transfer bed surrounding the heat storage material may vary to influence the flow of the fluid through the heat storage material. Alternatively or additionally, the heat-storage material may be fractioned (i.e., be separated in several portions such as different layers) to vary the overall porosity of the heat-transfer bed for the fluid.

For example, the heat storage material may comprise (e.g., exclusively) block shaped heat storage material, (e.g., exclusively) bulk heat storage material or combinations thereof. Bulk heat storage material is heat storage material, which is powdery, granular or lumpy in nature. Block shaped heat storage material is heat storage material, which is shaped as blocks, i.e., as compact solid forms (units) exhibiting a predefined shape such as saddles or honeycombs. Various examples will be described in the following.

In some examples of the present disclosure, the heat storage material comprises at least one layer formed of block shaped heat storage material and at least one layer formed of bulk heat storage material. Mixtures of block shaped heat storage material and bulk heat storage material may allow to manipulate the fluid pressure in the heat-transfer bed and, hence, allow to the flow behavior (e.g., flow directions) of the fluid through the heat storage material. Furthermore, mixtures of block shaped heat storage material and bulk heat storage material may allow to adjust the heat absorption as well as the heat release characteristics of the heat storage material throughout the heat-transfer bed as needed.

For example, the heat storage material may comprise at least a first layer, a second layer and a third layer arranged in sequence between the first opening and the second opening. The first layer and the third layer are formed of block shaped heat storage material. The second layer is formed of bulk heat storage material. In other words, a layer of bulk heat storage material may be sandwiched between two layers of block shaped heat storage material (e.g., along the thickness direction of the heat storage material/heat-transfer bed). The layer of bulk heat storage material between the layers of block shaped heat storage material allows to reduce the pressure drop of the fluid flowing through the heat storage material such that higher velocities of the fluid may be achieved. Such a sandwiched structure of bulk and block shaped heat storage material may be preferred for some applications. For example, a sandwiched structure of bulk and block shaped heat storage material may be preferred for certain types and/or concentrations of hazardous components in the fluid.

According to some examples of the present disclosure, extensions of the first layer and the third layer are different from each other along the thickness direction of the heat storage material/heat-transfer bed (the thickness direction extending from the first opening to the second opening, or vice versa). In other words, the layers of block shaped heat storage material may exhibit different thicknesses. Using different thicknesses for the layers of block shaped heat storage material may allow to provide an asymmetric structure of the heat storage material, which may be preferred for certain applications. For example, an asymmetric structure of the heat storage material may be beneficial for dealing with a decreasing pressure of the incoming fluid along the respective one of the first and the second opening, through which the fluid enters the heat-transfer bed. Alternatively, the first layer and the third layer may be equal to each other along the thickness direction. Accordingly, a symmetric structure of the heat storage material may be provided.

In alternative examples of the present disclosure, the heat storage material comprises at least a first layer, a second layer and a third layer arranged in sequence between the first opening and the second opening. The first layer and the third layer are formed of bulk heat storage material and the second layer is formed of block shaped heat storage material. In other words, a layer of block shaped heat storage material may be sandwiched between two layers of bulk heat storage material (e.g., along the thickness direction of the heat storage material/heat-transfer bed). The layers of bulk heat storage material allow to reduce the pressure drop of the fluid flowing through the heat storage material such that higher velocities of the fluid may be achieved. Such a sandwiched structure of bulk and block shaped heat storage material may be preferred for some applications. For example, a sandwiched structure of bulk and block shaped heat storage material may be preferred for certain types and/or concentrations of hazardous components in the fluid. Extensions of the first layer and the third layer may be different from or equal to each other along the thickness direction of the heat storage material/heat-transfer bed. In other words, a symmetric structure or an asymmetric structure of the heat storage material may be provided.

According to some examples of the present disclosure, the bulk heat storage material comprises a mixture of at least two different materials (e.g., materials exhibiting different chemical compositions, granularities or heat capacities). Concentrations of the at least two different materials in the bulk heat storage material vary along at least one spatial direction. Different materials provide (exhibit) different structural and/or thermal properties. By mixing different these materials with varying concentration(s) along the at least one spatial direction, the variation of at least one of a structural and a thermal property of the bulk heat storage material along at least one spatial direction may be achieved.

For example, the at least two materials may exhibit at least one of different geometries, different topographies, different heat capacities and different heat transfer capacities. Accordingly, one or more structural and/or thermal properties of the bulk heat storage material may be varied along at least one spatial direction.

In some examples of the present disclosure, a granularity of the bulk heat storage material varies along at least one spatial direction. The granularity defines the extent to which a material is made of (comprises) smaller or larger individual parts (particles, elements). Material with a high granularity comprises to a higher extent smaller individual parts than material exhibiting a low granularity. On the other hand, material with a low granularity comprises to a higher extent larger individual parts than material exhibiting a high granularity. Independent from the number of materials used for the bulk heat storage material, varying the granularity of the bulk heat storage material may allow to manipulate the pressure gradient of the fluid when flowing through the heat storage material. Accordingly, the flow behavior (e.g., flow directions) of the fluid through the heat storage material may be manipulated to increase the thermal efficiency of the heat-transfer bed. Furthermore, the heat transfer characteristic of the heat storage material may be varied by varying the granularity of the heat storage material.

According to some examples of the present disclosure, at least one of a structural property and a thermal property of the block shaped heat storage material varies along at least one spatial direction. For example, block dimensions or dimensions of channels formed in the blocks may change along at least one spatial direction. Similarly, a heat capacity and/or a heat transfer capacity of the block shaped heat storage material may change along at least one spatial direction. Also a chemical composition of the block shaped heat storage material may change along at least one spatial direction. The at least one of the structural property and the thermal property of the block shaped heat storage material may vary within a single layer of the block shaped heat storage material and/or between different layers of the block shaped heat storage material. Varying at least one structural or thermal property of the block shaped heat storage material may allow to adjust the flow behavior (e.g., flow directions) of the fluid through the heat storage material as well as heat absorption and the heat release characteristics of the block shaped heat storage material.

In further alternative examples of the present disclosure, the heat storage material comprises at least a first layer, a second layer and a third layer arranged in sequence between the first opening and the second opening. Each of the first, the second and the third layer is formed of block shaped heat storage material. The second layer is formed of different block shaped heat storage material than the first and the third layer. In other words, the layers of block shaped heat storage material are not identical to each other. Using a different block shaped heat storage material for the second layer than for the first and the third layers allows to vary at least one structural or thermal property of the heat storage material along at least one spatial direction in order to achieve one or more of the above described beneficial effects. For example, the block shaped heat storage material of the second layer may exhibit different dimensions or different dimensions of channels formed in the blocks than the block shaped heat storage material of the first and the third layer. Additionally or alternatively, the block shaped heat storage material of the second layer may exhibit at least one different thermal property than the block shaped heat storage material of the first and the third layer (e.g., different heat capacities and/or different heat transfer capacities). The block shaped heat storage material of the second layer may, e.g., be made of different material(s) than the block shaped heat storage material of the first and the third layer. In other words, the chemical composition of the block shaped heat storage material of the second layer may be different from that of the block shaped heat storage material of the first and the third layer. The first layer may be formed of different or identical block shaped heat storage material than/as the third layer.

In some examples of the present disclosure, in at least one of the first, the second and the third layer, at least one of a structural property and a thermal property of the block shaped heat storage material varies along at least one spatial direction. Varying at least one of a structural property and a thermal property of the block shaped heat storage material in at least one of the layers allows to vary at least one structural or thermal property of the heat storage material along at least one spatial direction in order to achieve one or more of the above described beneficial effects. For example, structural properties such as block dimensions or dimensions of channels formed in the blocks may vary along one or more spatial directions within one or more of the layers. Additionally or alternatively, the blocks within one or more of the layers may exhibit different thermal properties such as different heat capacities and/or different heat transfer capacities. Further additionally or alternatively, the blocks within one or more of the layers may exhibit different chemical compositions.

In still further alternative examples of the present disclosure, the heat storage material is bulk heat storage material. In other words, only bulk heat storage material may be used as heat storage material. Using only bulk heat storage material may allow to reduce the pressure drop of the fluid flowing through the heat storage material such that higher velocities of the fluid may be achieved.

According to some examples of the present disclosure, the granularity of the heat storage material decreases along the thickness direction of the heat storage material from each of the first opening and the second opening toward a center of the heat storage material. As described above, the thickness direction of the heat storage material extends from the first opening to the second opening, or vice versa. In other words, the heat storage material exhibits a finer granular size in the outer parts of the heat-transfer bed and exhibits a coarser granular size in the central part of the heat-transfer bed. The heat storage material with coarser granularity allows to minimize the pressure drop of the fluid in the central part of the heat-transfer bed, where the temperature and, hence, the velocity of the fluid is high. The heat storage material with finer granularity exhibits higher heat exchange ability (heat transfer capacity) such that in the outer parts of the heat-transfer bed, where the temperature and, hence, the velocity of the fluid is lower, the pressure drop of the fluid can be minimized while maintaining a high thermal efficiency. Having smaller size media in the outer parts of the heat-transfer bed and larger sized media in the central part of the heat-transfer bed allows for longer retention times of the fluid in the central part of the heat-transfer bed, which exhibits higher temperature, than in conventional beds with constant media size. This may allow to increase the reaction efficiency for substances in the fluid requiring longer times to react. For example, the proposed structure of the bulk heat storage material may be advantageous for the reaction processing of carbon monoxide (CO), nitrous oxide (N₂O) and certain odorous Volatile Organic Compounds (VOCs).

In some examples of the present disclosure, at least one of the heat capacity and the heat transfer capacity of the (bulk) heat storage material increases along the thickness direction of the (bulk) heat storage material/heat-transfer bed from each of the first opening and the second opening toward a center of the (bulk) heat storage material (the thickness direction of the heat storage material/heat-transfer bed extending from the first opening to the second opening, or vice versa). Increasing the heat capacity and/or the heat transfer capacity towards the central part of the heat-transfer bed may allow to provide a substantially homogeneous heat storage capability across the heat-transfer bed.

In alternative examples of the present disclosure, the granularity of the heat storage material increases along the thickness direction of the heat storage material/heat-transfer bed from each of the first opening and the second opening toward a center of the heat storage material. As described above, the thickness direction of the heat storage material extends from the first opening to the second opening, or vice versa. In other words, the heat storage material exhibits a coarser granular size in the outer parts of the heat-transfer bed and exhibits a finer granular size in the central part of the heat-transfer bed. The heat storage material with finer granularity exhibits higher heat exchange ability (heat transfer capacity) such that in the central part of the heat-transfer bed, where the temperature and, hence, the velocity of the fluid is higher, sufficient heat may be transferred to the fluid to cause reaction of the fluid and subsequently excess heat from the reacted fluid may be recovered with high efficiency. The heat storage material with coarser granularity allows to minimize the pressure drop of the fluid in the outer parts of the heat-transfer bed such that a resistance for the fluid is minimized. Accordingly, the fluid can enter, and the reacted fluid can exit the heat-transfer bed in a facilitated manner.

According to some examples of the present disclosure, at least one of the heat capacity and the heat transfer capacity of the heat storage material decreases along the thickness direction of the heat storage material from each of the first opening and the second opening toward a center of the heat storage material (the thickness direction of the heat storage material/heat-transfer bed extending from the first opening to the second opening, or vice versa). Decreasing the heat capacity and/or the heat transfer capacity towards the central part of the heat-transfer bed may allow to provide a substantially homogeneous heat storage capability across the heat-transfer bed.

In some examples of the present disclosure, the fluid reactor device further comprises a first plenum fluidly coupled to the first opening of the heat-transfer bed. The first plenum extends lengthwise along a first spatial direction such that fluid travels through the first plenum along the first spatial direction during a time period in which the first plenum is configured to supply the fluid to the heat-transfer bed. The granularity of the heat storage material increases along the first spatial direction. In other words, the granular size of the heat storage material gets finer along the first spatial direction. The first spatial direction may, e.g., be perpendicular to the thickness direction of the heat storage material/heat-transfer bed. The increasing granularity of the heat storage material along the first spatial direction may allow to positively influence the flow behavior (e.g., flow directions) of the fluid through the heat storage material as it allows to compensate for the decreasing velocity of the fluid in the first plenum along the first spatial direction during the time period in which the first plenum is configured to supply the fluid to the heat-transfer bed.

According to some examples of the present disclosure, the fluid reactor device further comprises a first plenum fluidly coupled to the first opening of the heat-transfer bed. The first plenum extends lengthwise along the first spatial direction such that fluid travels through the first plenum along the first spatial direction during a time period in which the first plenum is configured to supply the fluid to the heat-transfer bed. At least one of the heat capacity and the heat transfer capacity of the heat storage material increases along the first spatial direction. Increasing the heat capacity and/or the heat transfer capacity along the first spatial direction may allow to provide a substantially homogeneous heat storage capability across the heat-transfer bed.

In some examples of the present disclosure, the fluid reactor device further comprises a first plenum fluidly coupled to the first opening of the heat-transfer bed. At least one of the heat capacity and the heat transfer capacity of the heat storage material decreases along the thickness direction of the heat storage material from each of the first opening and the second opening toward a center of the heat storage material (the thickness direction of the heat storage material extending from the first opening to the second opening, or vice versa). Further, the first plenum extends lengthwise along the first spatial direction such that the fluid travels through the first plenum along the first spatial direction during a time period in which the first plenum is configured to supply the fluid to the heat-transfer bed. Additionally, at least one of the heat capacity and the heat transfer capacity of the heat storage material decreases along the first spatial direction. Decreasing the heat capacity and/or the heat transfer capacity toward the central part of the heat-transfer bed together with decreasing the heat capacity and/or the heat transfer capacity along the first spatial direction may allow to provide a substantially homogeneous heat storage capability across the heat-transfer bed. In particular, it allows to compensate for the decreasing velocity of the fluid in the first plenum along the first spatial direction during the time period in which the first plenum is configured to supply the fluid to the heat-transfer bed

According to some examples of the present disclosure, the (bulk) heat storage material comprises a mixture of at least two different materials exhibiting at least one of different heat capacities and different heat transfer capacities. Concentrations of the at least two different materials in the heat storage material vary. By mixing different materials with varying concentrations along one or more spatial directions, the variation of the heat capacity and/or the heat transfer capacity along the at least one spatial direction may be achieved. For example, the two materials may exhibit different chemical compositions.

In some examples of the present disclosure, the fluid reactor device further comprises a first plenum fluidly coupled to the first opening of the heat-transfer bed, and a second plenum fluidly coupled to the second opening of the heat-transfer bed. The first plenum and the second plenum are configured to alternatingly supply the fluid to the heat-transfer bed such that the fluid heats up and reacts while flowing through the heat storage material. Further, during a time period in which one of the first plenum and the second plenum is configured to supply the fluid to the heat-transfer bed, the other one of the first plenum and the second plenum is configured to drain the reacted fluid from the heat-transfer bed. The periodic reversion of the flow direction of the fluid through the heat storage material may allow to maintain a high heat exchange efficiency of the heat storage material (e.g., higher than 95 %). Accordingly, the fluid reactor device may recover substantially all the heat needed for sustaining a needed reaction temperature in the heat-transfer bed (e.g., an oxidation temperature or a reduction temperature). Accordingly, the fluid reactor device may be understood as a regenerative fluid reactor device.

In some examples of the present disclosure, the heat-transfer bed comprises a thermally insulating wall surrounding the heat storage material and extending between the first plenum and the second plenum. In these examples, the first opening and the second opening are formed in the thermally insulating wall. The thermally insulating wall may allow to minimize heat losses over the heat-transfer bed.

According to some examples of the present disclosure, a housing of the first plenum is at least partly formed of and/or is at least partly covered by a heat-insulating material. The heat-insulating material may allow to minimize heat loses over the housing of the first plenum. Analogously or alternatively, the housing of the second plenum may at least partly be formed of and/or at least partly be covered by a heat-insulating material to minimize heat loses over the housing of the second plenum.

According to some examples of the present disclosure, the fluid reactor device further comprises an electrical heater configured to heat the heat storage material to a predefined temperature suitable for thermal reaction of the fluid. The electrical heater may allow to initially heat the heat storage material to the predefined temperature. At least part of the electrical heater may be arranged in the heat-transfer bed such that the heat storage material surrounds at least part of the electrical heater. In other words, at least part of the electrical heater may be embedded in the heat storage material.

In some examples of the present disclosure, one or more hollow body are arranged in the heat storage material. At least part of the electrical heater is removably arranged in the one or more hollow body. The inner volume (i.e., the inside) of the one or more hollow body is accessible from the outside of the heat-transfer bed. For example, one or more (e.g., closable or sealable) service opening may be formed in a wall of the heat-transfer bed surrounding the heat storage material and be connected (coupled) to the one or more hollow body such that the inner volume of the one or more hollow body is accessible via the one or more service opening. At least part of the one or more hollow body may, e.g., be one or more tube placed in bulk heat storage material. Alternatively, recesses in at least part of the block shaped heat storage material may form at least part of the one or more hollow body. Optionally, one or more tube may be arranged in at least part of the recesses forming the one or more hollow body to further protect the electrical heater. At least part of the electrical heater is removably arranged in the one or more hollow body. Arranging at least part of the electrical heater removably in the one or more hollow body may allow to easily access and/or remove the electrical heater from the fluid reactor device for inspection, maintenance, etc. In particular, arranging at least part of the electrical heater in the one or more hollow body may allow to access and/or remove the electrical heater without removing heat storage material from the heat-transfer bed. This not only may simplify inspection, maintenance, etc. of the electrical heater, but also reduce downtimes of the fluid reactor device since heat storage material need not be removed from the heat-transfer bed. Furthermore, arranging at least part of the electrical heater in the one or more hollow body may allow to facilitate the installation of the electrical heater.

According to some examples of the present disclosure, catalyst material for lowering a reaction temperature of fluid is arranged within the heat-transfer bed. Due to the catalyst material, the needed temperature for the reaction of the fluid may be lowered such that the fluid reactor device may operate at lower temperatures.

According to a second aspect, the present disclosure provides a method for operating a fluid reactor device according to the present disclosure. The method comprises supplying fluid to the heat-transfer bed such that the fluid heats up and reacts while flowing through the heat storage material.

The method may allow for fluid reaction processing with increased efficiency as the variation of the at least one structural or thermal property of the heat storage material along at least one spatial direction allows to more efficiently use the heat stored in the heat-transfer bed.

### Brief description of the Figures

Some examples of apparatuses and/or methods will be described in the following by way of example only, and with reference to the accompanying figures, in which
Fig. 1 illustrates a sectional view of a first example of a fluid reactor device;
Fig. 2 illustrates a sectional view of a second example of a fluid reactor device;
Fig. 3 illustrates a sectional view of a third example of a fluid reactor device;
Fig. 4 illustrates a sectional view of a fourth example of a fluid reactor device;
Fig. 5 illustrates a sectional view of a fifth example of a fluid reactor device;
Fig. 6 illustrates a sectional view of a sixth example of a fluid reactor device;
Fig. 7 illustrates a sectional view of a seventh example of a fluid reactor device;
Fig. 8 illustrates a sectional view of an eighth example of a fluid reactor device;
Fig. 9 illustrates a sectional view of a nineth example of a fluid reactor device;
Fig. 10 illustrates a sectional view of a tenth example of a fluid reactor device;
Fig. 11 illustrates a sectional view of an eleventh example of a fluid reactor device; and
Fig. 12 illustrates a flowchart of an example of a method for operating a fluid reactor device as described herein.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

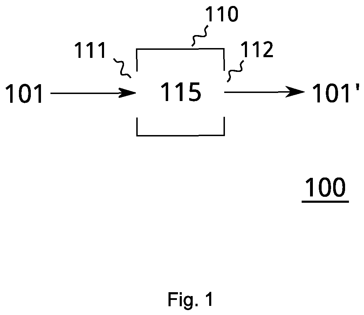

Fig. 1 schematically illustrates a fluid reactor device 100 for causing a fluid 101 to react. The fluid reactor device 100 causes at least part of the fluid 101 to react such that a reacted fluid 101' (i.e., the fluid after undergoing the reaction) is obtained.

The fluid 101 may be or comprise one or more gaseous components (substances, ingredients), one or more vapor components (substances, ingredients), one or more liquid components (substances, ingredients), and/or mixtures thereof. According to examples of the present disclosure, the fluid 101 may comprise exclusively gaseous components or substances. For example, the fluid 101 may be an exhaust gas or an exhaust air, wherein an exhaust air contains a higher proportion of oxygen compared to an exhaust gas.

The type of reaction is not limited. In particular, the fluid reactor device 100 may be a fluid purification device for purifying the fluid 101. In case the fluid reactor device 100 is a fluid purification device, the fluid purification device removes one or more ingredient or reactant from the fluid 101 by reaction processing for purifying the fluid. The one or more ingredient or reactant may be understood as one or more impurity and/or one or more pollutant. An impurity may be understood in this context as a substance (ingredient, reactant) in the fluid 101 that is not included in a desired (target) composition of the fluid 101. A pollutant may be understood in this context as a substance (ingredient, reactant) that harms systems, animals, humans and/or the environment when occurring in a specific quantity or concentration (e.g., defined as mass of the pollutant per unit volume of the fluid 101 or as number of pollutant particles per unit volume of the fluid 101). One or more impurity or pollutant contained in the fluid 101 may be combustible. In other words, the fluid 101 may comprises one or more combustible ingredient or reactant. For example, organic and/or inorganic impurities or pollutants may be removed from the fluid 101 by the fluid purification device. The organic and/or inorganic impurities or pollutants may, e.g., be VOCs, solvents, nitrogen oxides (NOₓ), methane (CH₄), sulfur oxides (SOₓ), hydrogen fluoride (HF), ammonia (NH₃), hydrogen chloride (HCl), dioxins, furans or pollutants of the basic structure CₓH_{y}O_{z} (C denotes carbon; H denotes hydrogen; O denotes oxygen; x, y, and z are natural numbers).

The fluid reactor device 100 comprises a (e.g., single, i.e., exactly/only one) heat-transfer bed 110. The heat-transfer bed 110 comprises (e.g., is filled with) heat storage material (heat transfer material) 115. Additionally, the heat-transfer bed 110 comprises a first opening 111 and a second opening 112 such that the heat storage material 115 is arranged between the first opening 111 and the second opening 112. The openings 111 and 112 are configured to allow the fluid 101 to enter the heat-transfer bed 110. The heat storage material 115 is configured to heat the fluid 101 such that the fluid 101 heats up and reacts while flowing through the heat storage material 115. Accordingly, the openings 111 and 112 are configured to allow the reacted fluid 101' to exit (leave) the heat-transfer bed 110. The heat storage material 115 is material capable of storing and releasing heat. The heat storage material exhibits a certain (predefined) specific heat capacity and preferably a certain (predefined) heat transfer and/or transmission coefficient. For example, the heat storage material 115 may comprise or be ceramic material such as alumina porcelain, mullite, fireclay (chamotte), cordierite, zircon or a mixture thereof. However, the present disclosure is not limited thereto. Other types of ceramic material may be used as well. In some examples, the heat storage material 115 may alternatively or additionally comprise or be concrete, stone, rock, metallic material or a mixture thereof. The heat storage material 115 may be packed structured or randomly in the heat-transfer bed 110 to form regular or irregular patterns (e.g., ceramic honeycombs, ceramic saddles or the like may be used). In other words, the heat storage material 115 may comprise (e.g., exclusively) block shaped heat storage material, (e.g., exclusively) bulk heat storage material or combinations thereof.

The flow direction of the fluid 101 through the heat storage material 115 may be constant (stable) over time as indicated in Fig. 1. In other examples, the flow direction of the fluid 101 through the heat storage material 115 may at least once be reversed over time (e.g., periodically or aperiodically).

At least one structural or thermal property of the heat storage material 115, the heat-transfer bed 110, or both varies along at least one spatial direction.

The at least one spatial direction may be any spatial direction such as a thickness direction of the heat storage material 115/heat-transfer bed 110 (e.g., the thickness direction of the heat storage material 115/heat-transfer bed 110 may extend from the first opening 111 to the second opening 112, or vice versa) or a spatial direction at a non-zero angle to the thickness direction. Further, it is to be noted that the at least one property may vary in one, two or more different spatial directions. The variation of the at least one property may be a continuous variation along the at least one spatial direction. Alternatively, the variation of the at least one property may be a local variation along the at least one spatial direction. In other words, the at least one property does not necessarily vary continuously along the at least one spatial direction. Rather, the at least one property may only vary within one or more limited ranges or areas of the at least one spatial direction and remain substantially constant (stable) else. The gradient of the variation may be constant or variable.

A structural property of the heat storage material 115 is any property defining the manner of construction of the heat storage material 115 or its individual parts, and/or the arrangement of the individual parts of the heat storage material 115. A thermal property of the heat storage material 115 is any property defining the response of the heat storage material 115 to heat. In other words, a thermal property of the heat storage material 115 is any property defining heat storage material 115's behavior or characteristics relating to or being caused by heat. A structural property of the heat-transfer bed 110 is any property defining the manner of construction of the heat-transfer bed 110 or its individual parts, and/or the arrangement of the individual parts of the heat-transfer bed 110. A thermal property of the heat-transfer bed 110 is any property defining the response of the heat-transfer bed 110 to heat. For example, one or more properties such as a structure of the heat storage material 115, a porosity of the heat storage material 115, a porosity of the heat-transfer bed 110, a geometry of the heat storage material 115, a topography of the heat storage material 115, a heat capacity of the heat storage material 115 and a heat transfer capacity of the heat storage material 115 may vary along at least one spatial direction.

Varying at least one structural or thermal property of the heat storage material 115 and/or the heat-transfer bed 110 along at least one spatial direction allows to more efficiently use the heat stored in the heat-transfer bed 110. For example, the variation of the at least one property may allow to adjust the heat storage material 115 and/or the heat-transfer bed 110 according to the pressure conditions of the fluid 101 being supplied to the heat-transfer bed 110. In particular, the variation of the at least one property may allow to adjust (shape) the heat absorption as well as the heat release characteristics of the heat storage material 115 and/or the heat-transfer bed 110 according to the pressure conditions of the fluid 101 being supplied to the heat-transfer bed 110 and the resulting flow directions of the fluid 101 through the heat storage material 115/the heat-transfer bed 110. Furthermore, the variation of the at least one property may allow to influence the flow behavior (e.g., flow directions) of the fluid 101 through the heat storage material 115/the heat-transfer bed 110.

In the following, a plurality of more detailed fluid reactor devices will be described with reference to the figures to highlight further aspects of the present disclosure.

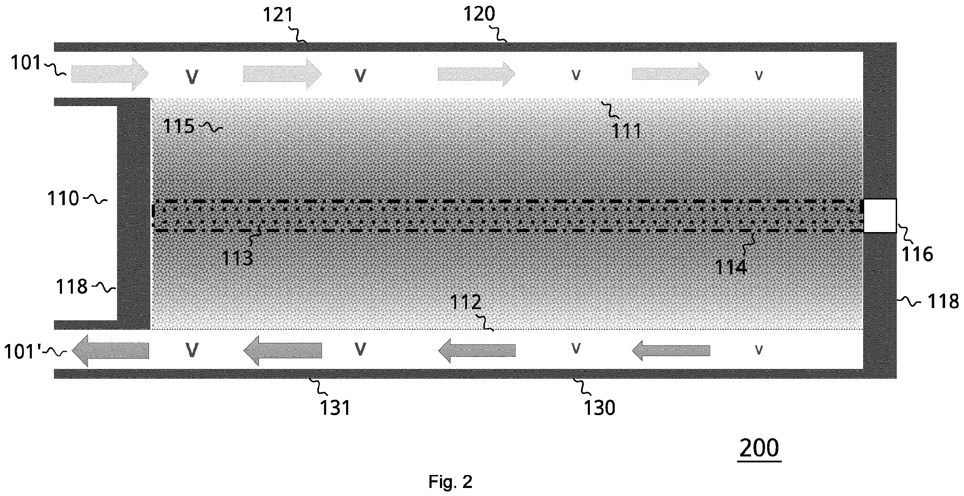

Fig. 2 schematically illustrates a sectional view of another fluid reactor device 200. The fluid reactor device 200 comprises a (e.g., single, i.e., exactly/only one) heat-transfer bed 110. The heat-transfer bed 110 comprises (e.g., is filled with) heat storage material (heat transfer material) 115.

The heat-transfer bed 110 comprises a thermally insulating wall 118 surrounding the heat storage material 115. A first opening 111 and a second opening 112 are formed in the thermally insulating wall 118. A first plenum 120 is attached to the first opening 111 of the heat-transfer bed 110, and a second plenum 130 is attached to the second opening 112 of the heat-transfer bed 110. The first opening 111 and the second opening 112 are arranged on opposite sides of the heat-transfer bed 110 such that the thermally insulating wall 118 extends between the first plenum 120 and the second plenum 130. In other examples, at least one of the first plenum 120 and the second plenum 130 need not be directly attached to the first and second openings 111 and 112. For example, one or more intermediate elements or a (temporary) bypass may be coupled between at least one of the first plenum 120 and the second plenum 130 and the first and second openings 111 and 112. In general, the first plenum 120 is fluidly coupled to the first opening 111, and the second plenum 130 is fluidly coupled to the second opening 112.

The first plenum 120 and the second plenum 130 are configured to alternatingly supply the fluid 101 to the heat-transfer bed 110 such that the fluid 101 heats up and reacts while flowing through the heat storage material 115. It is to be noted that all components of the fluid 101 or only part of the components of the fluid 101 may react. In other words, at least one component of the fluid 101 reacts while flowing through the heat storage material 115. That is, the fluid 101 may comprise one or more reactive component which reacts while flowing through the heat storage material 115 and one or more non-reactive component which does not react while flowing through the heat storage material 115. For example, the fluid 101 may be heated up and be subject to an oxidation process or a reduction process while flowing through the heat storage material 115. The fluid 101 may, e.g., comprise an exhaust air being a mixture of air (or a near air-like gas mixture) and at least one combustible (such as a VOC or the like). In this example, the VOC reacts with the air's oxygen while flowing through the heat storage material 115, whereas other components of the fluid 101 do not take part in the reaction. The heat storage material 115 is configured to store heat released by the fluid 101 during and/or after the reaction. For example, the reaction may take place in an inner (central) zone or area of the heat storage material 115/heat-transfer bed 110. The inner zone or area may be understood as a reaction zone or area within the heat-transfer bed. The inner zone or area is located at or near a center plane of the heat-transfer bed and/or may oscillate around center plane of the heat-transfer bed.

During a time period in which one of the first plenum 120 and the second plenum 130 is configured to supply the fluid 101 to the heat-transfer bed 110, the other one of the first plenum 120 and the second plenum 130 is configured to drain the reacted fluid 101' (i.e., the fluid after undergoing the reaction) from the heat-transfer bed 110. Accordingly, a flow direction of the fluid 101 through the heat storage material 115 is periodically reversed (e.g., every 90 to 120 seconds).

Fig. 2 illustrates the fluid reactor device 200 during a time period in which the first plenum 120 is configured to supply the fluid 101 to the heat-transfer bed 110 and the second plenum 130 is configured to drain the reacted fluid 101' from the heat-transfer bed 110. Accordingly, the fluid 101 flows from the top to the bottom of the heat-transfer bed 110 through the heat storage material 115. Heat energy previously stored in the top part of the heat storage material 115 is used to heat up the fluid 101 and causes the fluid 101 to react. The heat storage material 115 at the bottom part recovers the excess heat energy from the reacted fluid 101'. For example, as the fluid 101 passes from the top part to the bottom part of the heat storage material 115, VOCs in the fluid 101 may get hot enough to undergo thermal oxidation to water vapor and carbon dioxide.

During a time period in which the second plenum 130 is configured to supply the fluid 101 to the heat-transfer bed 110, the fluid flow is reversed. That is, while the second plenum 130 is configured to supply the fluid 101 to the heat-transfer bed 110, the first plenum 120 is configured to drain the reacted fluid 101' from the heat-transfer bed 110. Accordingly, the fluid 101 flows from the bottom to the top of the heat-transfer bed 110 through the heat storage material 115. Heat energy previously stored in the bottom part of the heat storage material 115 is used to heat up the fluid 101 and causes the fluid 101 to react. The heat storage material 115 at the top part recovers the heat energy from the reacted fluid 101'.

The periodic reversion of the flow direction of the fluid 101 through the heat storage material 115 may allow to maintain a high heat exchange efficiency of the heat storage material 115 (e.g., higher than 95 %). Accordingly, the fluid reactor device 200 may recover substantially all the heat needed for sustaining a needed reaction temperature in the heat-transfer bed 110 (e.g., an oxidation temperature or a reduction temperature). Accordingly, the fluid reactor device 200 may be understood as a regenerative fluid reactor device. For example, irrespective of the flow direction of the fluid 101 through the heat storage material 115, a temperature of the reacted fluid 101' may be less than 100 °C higher than that of the fluid 101 supplied to the heat-transfer bed 110 (e.g., the temperature may be only 20 °C to 50 °C higher). Further, the periodic reversion of the flow direction of the fluid 101 may allow to maintain a predetermined temperature profile of the heat-transfer bed 110 along the extension of the heat-transfer bed 110 between the first plenum 110 and the second plenum 120 (i.e., along the vertical extension of the heat-transfer bed in the example of Fig. 1). In particular, the periodic reversion of the flow direction of the fluid 101 may allow to keep the hottest zone near a center plane of the heat-transfer bed 110 along the extension of the heat-transfer bed 110 between the first plenum 110 and the second plenum 120. In other words, the hottest zone may substantially be the inner zone or area of the heat storage material 115/heat-transfer bed 110.

During operation of the fluid reactor device 200, the heat storage material 115 may exhibit a predefined temperature suitable for thermal reaction of the fluid 101. For example, the predefined temperature may be more than approx. 600 °C, 800 °C or 1000 °C. The fluid reactor device 200 may according to some examples of the present disclosure comprise an electrical heater 113 configured to heat the heat storage material 115 to the predefined temperature. It is to be noted that the electrical heater 113 is not mandatory. For example, the electrical heater 113 may be one of the following: an electro-resistive heater (e.g., grid of electrical coils arranged in the heat storage material 115), an electro-magnetic heater (inductive heater), or an electrically driven radiation heater (e.g. an infrared, IR, emitter). The electrical heater 113 may, e.g., be used to initially heat the heat storage material 115 to the predefined temperature (e.g., after start-up of the fluid reactor device 200). In the example of Fig. 1, one electrical heater 113 is arranged in the center region of the heat-transfer bed 110 and extends perpendicular to the extension of the heat-transfer bed 110 between the first plenum 110 and the second plenum 120. However, it is to be noted that the present disclosure is not limited thereto. The arrangement as well as the extension of the electrical heater 113 may be different from what is shown in Fig. 1.

Furthermore, it is to be noted that the electrical heater 113 need not be arranged directly in the heat storage material 115. Optionally, one or more hollow body such as the hollow body 114 may be arranged in the heat storage material 115. The inner volume (i.e., the inside) of the one or more hollow body is accessible from the outside of the heat-transfer bed 110. For example, one or more (e.g., closable or sealable) service opening such as the service opening 116 may be formed in thermally insulating wall 118 and be connected (coupled) to the one or more hollow body such that the inner volume of the one or more hollow body is accessible via the one or more service opening. At least part of the electrical heater 113 (e.g., its electrical coils) is removably arranged in the one or more hollow body. Arranging at least part of the electrical heater removably in the one or more hollow body may allow to easily access and/or remove the electrical heater 113 from the fluid reactor device 200 for inspection, maintenance, etc. In particular, arranging at least part of the electrical heater in the one or more hollow body may allow to access and/or remove the electrical heater 113 without removing heat storage material 115 from the heat-transfer bed 110. This not only may simplify inspection, maintenance, etc. of the electrical heater 113, but also reduce downtimes of the fluid reactor device 200 since heat storage material 115 need not be removed from the heat-transfer bed 110. Furthermore, installation of the electrical heater 113 may be facilitated.

The one or more hollow body exhibits a certain (predefined) specific heat capacity and preferably a certain (predefined) heat transfer and/or transmission coefficient, which should be high and/or may be similar to the ones of the heat storage material 115, to enable efficient heat transport from the electrical heater 113 to the heat storage material 115 surrounding the one or more hollow body. For example, the one or more hollow body may comprise or be ceramic material such as alumina porcelain, mullite, fireclay (chamotte), cordierite, zircon or a mixture thereof. However, the present disclosure is not limited thereto. Other types of material may be used as well (e.g., concrete, stone, rock, metallic material or a mixture thereof).

According to some examples of the present disclosure, catalyst material for lowering a reaction temperature of the fluid 101 may be arranged within the heat-transfer bed 110. Accordingly, the needed temperature for the reaction of the fluid 101 (e.g., oxidation or rection) may be lower such that the fluid reactor device 200 may operate at lower temperatures. For example, one or more layer of catalyst material may be provided separate from the heat storage material 115. One or more layer of catalyst material may, e.g., be attached to one or both ends of the heat-transfer bed 110 along the (possible) flow directions of the fluid (e.g., near the first opening 111 and the second opening 112). Alternatively or additionally, the heat storage material 115 in the heat-transfer bed 110 (e.g., cordierite) may at least in part be coated with and/or comprise (contain) catalyst material or catalytically active components. Further alternatively or additionally, catalyst material may be admixed to the heat storage material 115 in the heat-transfer bed 110. Still further alternatively or additionally, a first part of the heat storage material 115 in the heat-transfer bed 110 may be coated with and/or comprise (contain) catalyst material or catalytically active components, whereas a second part of the heat storage material 115 in the heat-transfer bed 110 does not comprise catalyst material and catalytically active components. The first part and the second part of the heat storage material 115 may be admixed or be provided as different layers in the heat-transfer bed 110. For example, one or more oxidation catalysts and/or one or more reduction catalysts may be used. However, the present disclosure is not limited thereto. Also other types of catalysts may be used.

In case the fluid reactor device 200 is a fluid purification device, the fluid purification device may, e.g., purify the fluid 101 by Regenerative Thermal Oxidation (RTO). In other examples of the present disclosure, the fluid purification device may purify the fluid 101 by Regenerative Catalytic Oxidation (RCO). For example, the fluid purification device may be configured to purify the fluid 101 by flameless RTO or flameless RCO. However, the present disclosure is not limited thereto. Also other reactions of the fluid 101 such as a reduction of fluid may be used.

Each of the first plenum 120 and the second plenum 130 comprises a respective housing 121, 131 attached to the heat-transfer bed 110 such that the respective volume enclosed by the respective housing 121, 131 forms a respective plenum space for alternatingly transporting the fluid 101 towards and transporting the reacted fluid 101' away from the heat-transfer bed 110. The first plenum 120 and the second plenum 130 may alternatingly be coupled to a respective one of a source providing/emitting the fluid 101 (e.g., a device such as a machine or a production facility emitting the fluid 101) and a receiver of the reacted fluid 101' (e.g., a chimney for releasing the reacted fluid 101' to the environment or another device or system for further treating the reacted fluid 101') by a coupling system (not illustrated in Fig. 1). The coupling system may be part of the fluid reactor device 200 or be external to the fluid reactor device 200. The housing 121 of the first plenum 120 may according to examples of the present disclosure at least partly be formed of and/or be at least partly covered by a heat-insulating material to minimize heat loses over the housing 121 of the first plenum 120. Analogously, the housing 131 of the second plenum 130 may according to examples of the present disclosure at least partly be formed of and/or be at least partly covered by a heat-insulating material to minimize heat loses over the housing 131 of the second plenum 130.

In the example of Fig. 2, the heat storage material 115 is (exclusively) bulk heat storage material. The granularity of the heat storage material 115 decreases along the thickness direction of the heat storage material 115/heat-transfer bed 110 from each of the first opening 111 and the second opening 112 toward the center of the heat storage material 115/heat-transfer bed 110. The thickness direction of the heat storage material 115/heat-transfer bed 110 extends from the first opening 111 to the second opening 112. In other words, the heat storage material 115 exhibits a finer granular size in the outer parts of the heat storage material 115/heat-transfer bed 110 (near the openings 111 and 112) and exhibits a coarser granular size in the central part of the heat storage material 115/heat-transfer bed 110. The heat storage material 115 with coarser granularity allows to minimize the pressure drop of the fluid 101 in the central part of the heat-transfer bed 110, where the temperature and, hence, the velocity of the fluid 101 is high. The heat storage material 115 with finer granularity exhibits higher heat exchange ability (heat transfer capacity) such that in the outer parts of the heat-transfer bed 110, where the temperature and, hence, the velocity of the fluid 101 and also the reacted fluid 101' is lower, the pressure drop of the fluid 101 and also the reacted fluid 101' can be minimized while maintaining a high thermal efficiency. Having smaller size media in the outer parts of the heat-transfer bed 110 and larger sized media in the central part of the heat-transfer bed 110 allows for longer retention times of the fluid 101 in the central part of the heat-transfer bed 110, which exhibits higher temperature, than in conventional beds with constant media size. This may allow to increase the reaction efficiency for substances in the fluid 101 requiring longer times to react. For example, the proposed structure of the bulk heat storage material 115 may be advantageous for the reaction processing of CO, N₂O and certain odorous VOCs.

Optionally, at least one of the heat capacity and the heat transfer capacity of the heat storage material 115 may increase along the thickness direction of the heat storage material 115/heat-transfer bed 110 from each of the first opening 111 and the second opening 112 toward the center of the heat storage material 115/heat-transfer bed 110. In other words, the heat storage material 115 may exhibit a lower heat capacity and/or heat transfer capacity in the outer parts of the heat storage material 115/heat-transfer bed 110 (near the openings 111 and 112) and exhibit a higher heat capacity and/or heat transfer capacity in the central part of the heat storage material 115/heat-transfer bed 110. Increasing the heat capacity and/or the heat transfer capacity towards the central part of the heat storage material 115/heat-transfer bed 110 may allow to provide a substantially homogeneous heat storage capability across the heat-transfer bed 110.

The variation of the heat capacity and/or heat transfer capacity may, e.g., be achieved by using a mixture of at least two different materials exhibiting at least one of different heat capacities and different heat transfer capacities for the heat storage material 115. By varying concentrations of the at least two different materials in the heat storage material 115, the heat capacity and/or heat transfer capacity may be varied from the each of the first opening 111 and the second opening 112 toward the center of the heat storage material 115/heat-transfer bed 110.

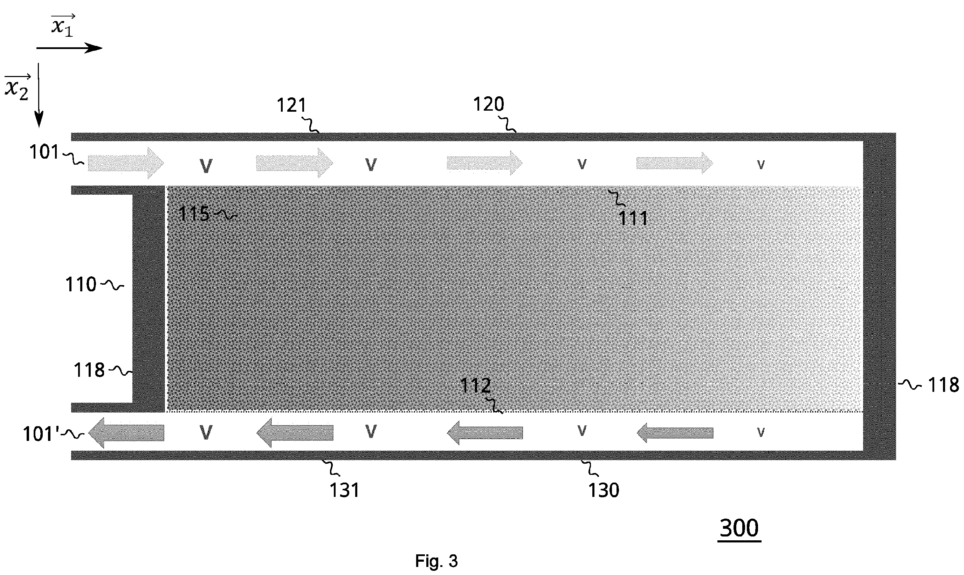

In the following, a plurality of variations of the fluid reactor device 200 will be described with reference to Figs. 3 to 11. Various elements such as the heater 113, the hollow body 114 and the service opening 116 illustrated in Fig. 2 are at least partly omitted in Figs. 3 to 11. Although these elements are omitted in Figs. 3 to 11 for reasons of simplicity, it is to be noted that the fluid reactor devices illustrated in these figures may optionally comprise one or more of these elements.

Fig. 3 illustrates another fluid reactor device 300 during a time period in which the first plenum 120 is configured to supply the fluid 101 to the heat-transfer bed 110. The first plenum 120 extend lengthwise along a first spatial direction *̅x̅*̅₁̅. The first spatial direction *̅x̅*̅₁̅ is substantially perpendicular to a second spatial direction *̅x̅*̅₂̅ denoting the main flow direction of the fluid 101 through the through the heat storage material 115 (i.e., the thickness direction of the heat storage material 115/heat-transfer bed 110). The fluid 101 travels through the first plenum 120 along the first spatial direction *̅x̅*̅₁̅ during the time period in which the first plenum 120 is configured to supply the fluid 101 to the heat-transfer bed 110.

In the example of Fig. 3, the fluid 101 substantially travels from the left to the right. The static pressure of the fluid 101 in the first plenum 120 varies with the speed of the fluid 101. In particular, the static pressure of fluid 101 in the first plenum 120 increases if the speed of the fluid 101 decreases (the dynamic pressure of the fluid 101 on the other hand decreases if the speed of the fluid 101 decreases). The speed of the fluid 101 decreases along the first spatial direction *̅x̅*̅₁̅ as indicated in Fig. 3 by the size of the reference signs "V" depicted in the first plenum 120, which decreases from the left to the right.

The heat storage material 115 is (exclusively) bulk heat storage material. The granularity of the heat storage material 115 increases along the first spatial direction *̅x̅*̅₁̅. In other words, the granular size of the heat storage material 115 gets finer along the first spatial direction *̅x̅*̅₁̅.

The increasing granularity of the heat storage material 115 along the first spatial direction *̅x̅*̅₁̅ allows to positively influence the flow behavior (e.g., flow directions) of the fluid 101 through the heat storage material 115 as it allows to compensate for the decreasing velocity of the fluid 101 in the first plenum 120 along the first spatial direction *̅x̅*̅₁̅ during the time period in which the first plenum 120 is configured to supply the fluid 101 to the heat-transfer bed 110. Analogously, the increasing granularity of the heat storage material 115 along the first spatial direction *̅x̅*̅₁̅ allows compensate for the decreasing velocity of the fluid 101 in the second plenum 130 along the first spatial direction *̅x̅*̅₁̅ during the time period in which the second plenum 130 is configured to supply the fluid 101 to the heat-transfer bed 110.

Optionally, at least one of the heat capacity and the heat transfer capacity of the heat storage material 115 may increase along the first spatial direction *̅x̅*̅₁̅. Increasing the heat capacity and/or the heat transfer capacity along the first spatial direction *̅x̅*̅₁̅ may allow to provide a substantially homogeneous heat storage capability across the heat-transfer bed 110.

The variation of the heat capacity and/or heat transfer capacity may, e.g., be achieved by using a mixture of at least two different materials exhibiting at least one of different heat capacities and different heat transfer capacities for the heat storage material 115. By varying concentrations of the at least two different materials in the heat storage material 115, the heat capacity and/or heat transfer capacity may be varied along the first spatial direction *̅x̅*̅₁̅.

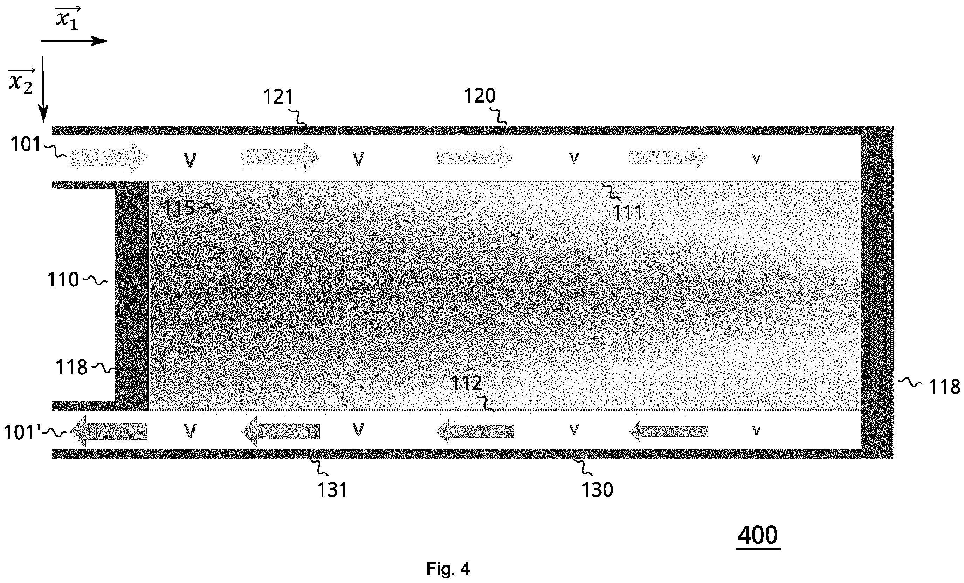

Fig. 4 schematically illustrates another fluid reactor device 400 during a time period in which the first plenum 120 is configured to supply the fluid 101 to the heat-transfer bed 110. The fluid reactor device 400 is a combination of the fluid reactor devices 200 and 300.

In the example of Fig. 4, the granularity of the heat storage material 115 decreases along the thickness direction of the heat storage material 115/heat-transfer bed 110 (which is identical to the second spatial direction *̅x̅*̅₂̅ ) from each of the first opening 111 and the second opening 112 toward the center of the heat storage material 115/heat-transfer bed 110. Additionally, the granularity of the heat storage material 115 increases along the first spatial direction *̅x̅*̅₁̅. In other words, the heat storage material 115 exhibits a finer granular size in the outer parts of the heat storage material 115/heat-transfer bed 110 (near the openings 111 and 112) and exhibits a coarser granular size in the central part of the heat storage material 1 15/heat-transfer bed 110. Furthermore, the granular size of the heat storage material 115 gets finer along the first spatial direction *̅x̅*̅₁̅.

Similar to what is described with respect to Fig. 2 and Fig. 3, the variation of the heat storage material 115's granularity along two spatial directions allows for longer retention times of the fluid 101 in the central part of the heat-transfer bed 110 to increase the reaction efficiency, and to compensate for the decreasing velocity of the fluid 101 in the first plenum 120 along the first spatial direction *̅x̅*̅₁̅ during the time period in which the first plenum 120 is configured to supply the fluid 101 to the heat-transfer bed 110. In other words, the flow behavior (e.g., flow directions) of the fluid 101 through the heat storage material 115 may be improved. Analogously, the variation of the heat storage material 115's granularity along two spatial directions allows for longer retention times of the fluid 101 in the central part of the heat-transfer bed 110 to increase the reaction efficiency, and to compensate for the decreasing velocity of the fluid 101 in the second plenum 130 along the first spatial direction *̅x̅*̅₁̅ during the time period in which the second plenum 130 is configured to supply the fluid 101 to the heat-transfer bed 110.

Optionally, at least one of the heat capacity and the heat transfer capacity of the heat storage material 115 may increase along the thickness direction of the heat storage material 115/heat-transfer bed 110 from each of the first opening 111 and the second opening 112 toward the center of the heat storage material 115/heat-transfer bed 110. Furthermore, at least one of the heat capacity and the heat transfer capacity of the heat storage material 115 may increase along the first spatial direction *̅x̅*̅₁̅. In other words, the heat storage material 115 may exhibit a lower heat capacity and/or heat transfer capacity in the outer parts of the heat storage material 115/heat-transfer bed 110 (near the openings 111 and 112) and exhibit a higher heat capacity and/or heat transfer capacity in the central part of the heat storage material 115/heat-transfer bed 110. The variation of the heat storage material 115's heat capacity and/or heat transfer capacity along two spatial directions may allow to provide a substantially homogeneous heat storage capability across the heat-transfer bed 110.

The variation of the heat capacity and/or heat transfer capacity may, e.g., be achieved by using a mixture of at least two different materials exhibiting at least one of different heat capacities and different heat transfer capacities for the heat storage material 115. By varying concentrations of the at least two different materials in the heat storage material 115 along the thickness direction of the heat storage material 115/heat-transfer bed 110 (i.e., the second spatial direction *̅x̅*̅₂̅ ) and the first spatial direction *̅x̅*̅₁̅, the heat capacity and/or heat transfer capacity may be varied as described above.

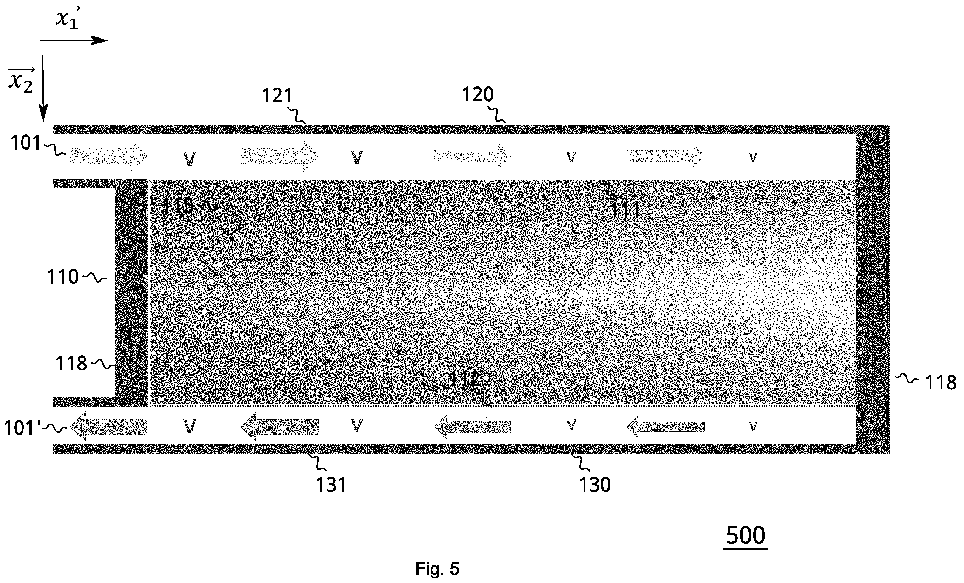

**Fig. 5** schematically illustrates another fluid reactor device 500 during a time period in which the first plenum 120 is configured to supply the fluid 101 to the heat-transfer bed 110.

The heat storage material 115 is (exclusively) bulk heat storage material. In the example of Fig. 5, the granularity of the heat storage material 115 increases along the thickness direction of the heat storage material 115/heat-transfer bed 110 (which is identical to the second spatial direction *̅x̅*̅₂̅ ) from each of the first opening 111 and the second opening 112 toward the center of the heat storage material 115/heat-transfer bed 110. Additionally, granularity of the heat storage material 115 increases along the first spatial direction *̅x̅*̅₁̅. In other words, the heat storage material 115 exhibits a coarser granular size in the outer parts of the heat storage material 115/heat-transfer bed 110 (near the openings 111 and 112) and exhibits a finer granular size in the central part of the heat storage material 115/heat-transfer bed 110. Furthermore, the granular size of the heat storage material 115 gets finer along the first spatial direction *̅x̅*̅₁̅.

The heat storage material 115 with finer granularity exhibits higher heat exchange ability (heat transfer capacity) such that in the central part of the heat storage material 115/heat-transfer bed 110, where the temperature and, hence, the velocity of the fluid 101 is higher, sufficient heat may be transferred to the fluid 101 to cause reaction of the fluid 101 and subsequently excess heat from the reacted fluid 101' may be recovered with high efficiency. The heat storage material 115 with coarser granularity allows to minimize the pressure drop of the fluid in the outer parts of the heat storage material 115/heat-transfer bed 110 such that a resistance for the fluid 101 and the reacted fluid 101' is minimized. Accordingly, the fluid 101 can enter, and the reacted fluid 101' can exit the heat storage material 115/heat-transfer bed 110 in a facilitated manner.

The increasing granularity of the heat storage material 115 along the first spatial direction *̅x̅*̅₁̅ allows to positively influence the flow behavior (e.g., flow directions) of the fluid 101 through the heat storage material 115 as it allows to compensate for the decreasing velocity of the fluid 101 in the first plenum 120 along the first spatial direction *̅x̅*̅₁̅ during the time period in which the first plenum 120 is configured to supply the fluid 101 to the heat-transfer bed 110. Analogously, the increasing granularity of the heat storage material 115 along the first spatial direction *̅x̅*̅₁̅ allows compensate for the decreasing velocity of the fluid 101 in the second plenum 130 along the first spatial direction *̅x̅*̅₁̅ during the time period in which the second plenum 130 is configured to supply the fluid 101 to the heat-transfer bed 110.

Optionally, at least one of the heat capacity and the heat transfer capacity of the heat storage material 115 may increase along the thickness direction of the heat storage material 115/heat-transfer bed 110 from each of the first opening 111 and the second opening 112 toward the center of the heat storage material 115/heat-transfer bed 110. Furthermore, at least one of the heat capacity and the heat transfer capacity of the heat storage material 115 may increase along the first spatial direction *̅x̅*̅₁̅. In other words, the heat storage material 115 may exhibit a lower heat capacity and/or heat transfer capacity in the outer parts of the heat storage material 115/heat-transfer bed 110 (near the openings 111 and 112) and exhibit a higher heat capacity and/or heat transfer capacity in the central part of the heat storage material 115/heat-transfer bed 110. The variation of the heat storage material 115's heat capacity and/or heat transfer capacity along two spatial directions may allow to provide a substantially homogeneous heat storage capability across the heat-transfer bed 110.

The variation of the heat capacity and/or heat transfer capacity may, e.g., be achieved by using a mixture of at least two different materials exhibiting at least one of different heat capacities and different heat transfer capacities for the heat storage material 115. By varying concentrations of the at least two different materials in the heat storage material 115 along the thickness direction of the heat storage material 115/heat-transfer bed 110 (i.e., the second spatial direction *̅x̅*̅₂̅ ) and the first spatial direction *̅x̅*̅₁̅, the heat capacity and/or heat transfer capacity may be varied as described above.

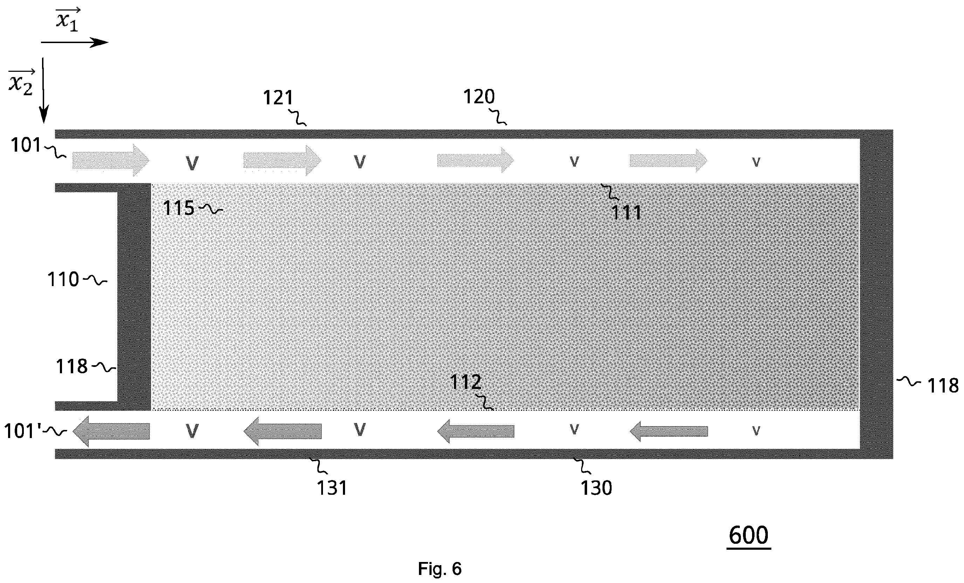

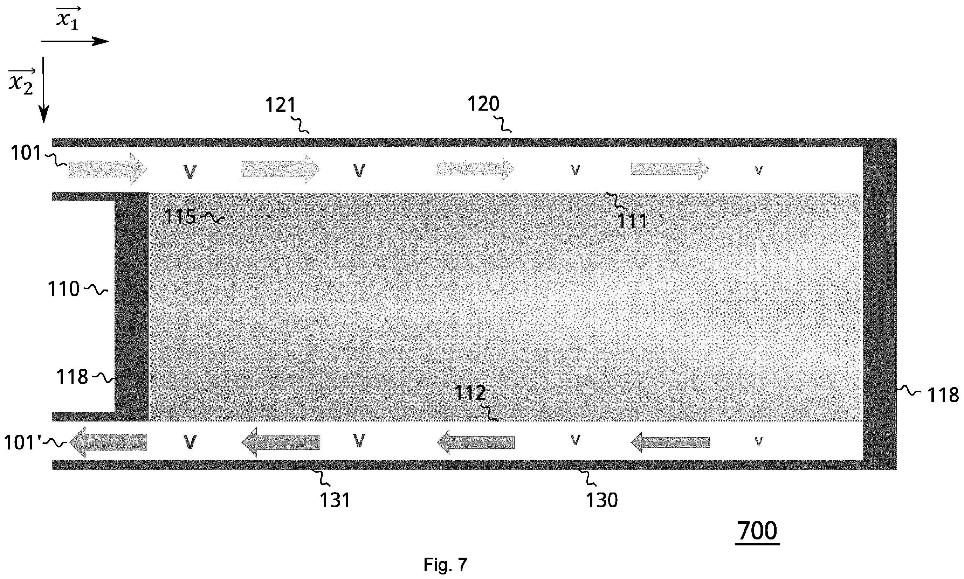

In the examples described above with reference to Fig. 2 to Fig. 5, the granularity, i.e., a structural property of the heat storage material 115 is varied and optionally the heat capacity and/or heat transfer capacity, i.e., at least one thermal property of the heat storage material 115 is varied. However, it is to be noted that varying a structural property of the heat storage material 115 is not mandatory. In the following, two corresponding fluid reactor devices will be described with reference to Fig. 6 and Fig. 7.

**Fig. 6** schematically illustrates another fluid reactor device 600 during a time period in which the first plenum 120 is configured to supply the fluid 101 to the heat-transfer bed 110.

The heat storage material 115 is (exclusively) bulk heat storage material. In the example of Fig. 6, at least one of the heat capacity and the heat transfer capacity of the heat storage material 115 increases along the first spatial direction *̅x̅*̅₁̅. Increasing the heat capacity and/or the heat transfer capacity along the first spatial direction *̅x̅*̅₁̅ allows to provide a substantially homogeneous heat storage capability across the heat-transfer bed 110.

The variation of the heat capacity and/or heat transfer capacity may, e.g., be achieved by using a mixture of at least two different materials exhibiting at least one of different heat capacities and different heat transfer capacities for the heat storage material 115. By varying concentrations of the at least two different materials in the heat storage material 115, the heat capacity and/or heat transfer capacity may be varied along the first spatial direction *̅x̅*̅₁̅.

The granularity of the heat storage material 115 is (substantially) constant across the heat-transfer bed 110. In other words, the granularity of the heat storage material 115 is (substantially) not varied across the heat-transfer bed 110.

**Fig. 7** schematically illustrates another fluid reactor device 700 during a time period in which the first plenum 120 is configured to supply the fluid 101 to the heat-transfer bed 110.

The heat storage material 115 is (exclusively) bulk heat storage material. In the example of Fig. 7, at least one of the heat capacity and the heat transfer capacity of the heat storage material 115 decreases along the thickness direction of the heat storage material 115 from each of the first opening 111 and the second opening 112 toward the center of the heat storage material 115/heat-transfer bed 110. Furthermore, at least one of the heat capacity and the heat transfer capacity of the heat storage material 115 decreases along the first spatial direction *̅x̅*̅₁̅. In other words, the heat storage material 115 may exhibit a higher heat capacity and/or heat transfer capacity in the outer parts of the heat storage material 115/heat-transfer bed 110 (near the openings 111 and 112) and exhibit a lower heat capacity and/or heat transfer capacity in the central part of the heat storage material 115/heat-transfer bed 110. The variation of the heat storage material 115's heat capacity and/or heat transfer capacity along two spatial directions may allow to provide a substantially homogeneous heat storage capability across the heat-transfer bed 110.

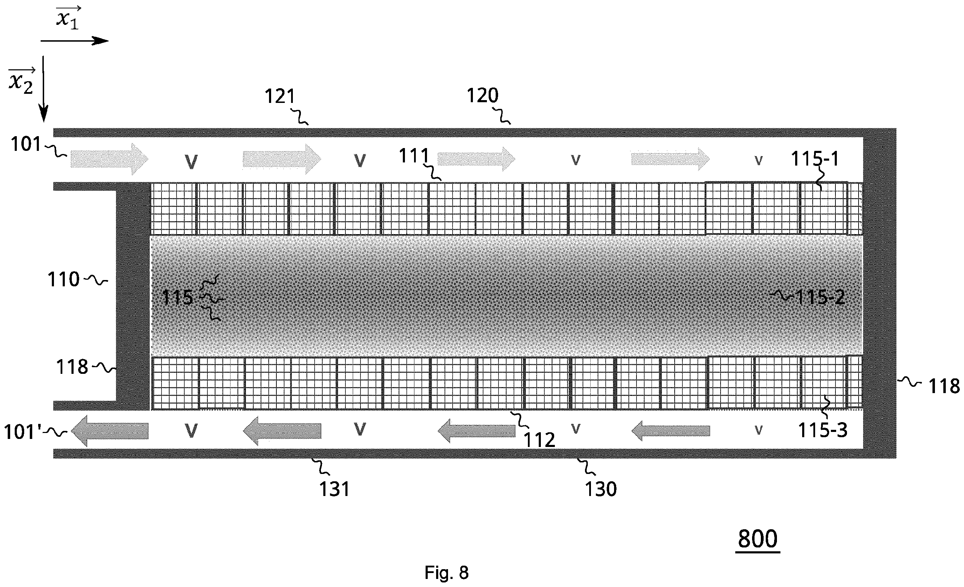

In the examples described above with reference to Fig. 2 to Fig. 7, the heat storage material 115 is (exclusively) bulk heat storage material. However, it is to be noted that the present disclosure is not limited thereto. Block shaped heat storage material may be used as well. In the following, a plurality of fluid purification devices comprising (exclusively) block shaped heat storage material, or combinations of bulk heat storage material and block shaped heat storage material will be described with reference to Figs. 8 to 11.

**Fig. 8** schematically illustrates another fluid reactor device 800 during a time period in which the first plenum 120 is configured to supply the fluid 101 to the heat-transfer bed 110.

In the example of Fig. 8, the heat storage material 115 comprises at least a first layer 115-1, a second layer 115-2 and a third layer 115-3 arranged in sequence between the first opening 111 and the second opening 112. The first layer 115-1 and the third layer 115-3 are formed of block shaped heat storage material and the second layer 115-3 is formed of bulk heat storage material. Such a sandwiched structure of bulk and block shaped heat storage material may be preferred for some applications.

In the example of Fig. 8, extensions of the first layer 115-1 and the third layer 115-3 are equal to each other along the thickness direction of the heat storage material 115/heat-transfer bed 110. In other words, the first layer 115-1 and the third layer 115-3 exhibit the same thickness. Accordingly, a symmetric structure of the heat storage material 115 may be provided. However, it is to be noted that the present disclosure is not limited thereto. In other examples, extensions of the first layer 115-1 and the third layer 115-3 may be different from each other along the thickness direction of the heat storage material 115/heat-transfer bed 110. In other words, the layers of block shaped heat storage material may exhibit different thicknesses. Using different thicknesses for the layers 115-1 and 115-3 of block shaped heat storage material may allow to provide an asymmetric structure of the heat storage material 115, which may be desired for certain applications. For example, the first layer 115-1 and the third layer 115-3 may be formed from different numbers of sub-layers of block shaped heat storage material to achieve different extensions of the first layer 115-1 and the third layer 115-3 along the thickness direction of the heat storage material 115/heat-transfer bed 110.

Furthermore, at least one of a structural property and a thermal property of the block shaped heat storage material may vary along at least one spatial direction. For example, a structural property and/or a thermal property of the block shaped heat storage material may vary along at least one spatial direction in the first layer 115-1, the third layer 115-3 or both. Block dimensions or dimensions of channels formed in the blocks of at least one of the first layer 115-1 and the third layer 115-3 may, e.g., change along at least one spatial direction. Similarly, a heat capacity and/or a heat transfer capacity of the block shaped heat storage material of at least one of the first layer 115-1 and the third layer 115-3 may change along at least one spatial direction. As described above, the at least one of the structural property and the thermal property of the block shaped heat storage material may vary within a single layer of the block shaped heat storage material such as the layer 115-1 and/or between different layers of the block shaped heat storage material (e.g., between the layers 115-1 and 115-3). Varying at least one structural or thermal property of the block shaped heat storage material may allow to adjust the flow behavior (e.g., flow directions) of the fluid 101 through the heat storage material 115 as well as heat absorption and the heat release characteristics of the block shaped heat storage material.

In the example of Fig. 8, the granularity of the bulk heat storage material varies along the spatial direction *̅x̅*̅₂̅, i.e., the thickness direction of the heat storage material 115/heat-transfer bed 110. The granularity of the bulk heat storage material decreases along the thickness direction of the heat storage material 115/heat-transfer bed 110 from each of the first opening 111 and the second opening 112 toward the center of the heat storage material 115/heat-transfer bed 110. In other words, the bulk heat storage material exhibits a finer granular size in the outer parts of the heat storage material 115/heat-transfer bed 110 (near the openings 111 and 112) and exhibits a coarser granular size in the central part of the heat storage material 115/heat-transfer bed 110. The bulk heat storage material with coarser granularity allows to minimize the pressure drop of the fluid 101 in the central part of the second layer 115-2, where the temperature and, hence, the velocity of the fluid 101 is high. The bulk heat storage material with finer granularity exhibits higher heat exchange ability (heat transfer capacity) such that in the outer parts of the second layer 115-2, where the temperature and, hence, the velocity of the fluid 101 and also the reacted fluid 101' is lower, the pressure drop of the fluid 101 and also the reacted fluid 101' can be minimized while maintaining a high thermal efficiency. Having smaller size media in the outer parts of the second layer 115-2 and larger sized media in the central part of the second layer 115-2 allows for longer retention times of the fluid 101 in the central part of the second layer 115-2, which exhibits higher temperature, than in conventional beds with constant media size.

However, it is to be noted that the granularity or any other structural property need not vary in other examples of the present disclosure. In these examples, the granularity of the bulk heat storage material may be (substantially) constant across the second layer 115-2. In other words, the granularity of the bulk heat storage material may (substantially) not be varied across the second layer 115-2.

Optionally, at least one of the heat capacity and the heat transfer capacity of the bulk heat storage material may increase along the thickness direction of the heat storage material 115/heat-transfer bed 110 from each of the first opening 111 and the second opening 112 toward the center of the heat storage material 115/heat-transfer bed 110. In other words, the heat storage material 115 may exhibit a lower heat capacity and/or heat transfer capacity in the outer parts of the heat storage material 115/heat-transfer bed 110 (near the openings 111 and 112) and exhibit a higher heat capacity and/or heat transfer capacity in the central part of the heat storage material 115/heat-transfer bed 110. Increasing the heat capacity and/or the heat transfer capacity towards the central part of the second layer 115-2 may allow to provide a substantially homogeneous heat storage capability across the second layer 115-2.

The variation of the heat capacity and/or heat transfer capacity and/or the variation of the granularity in the second layer 115-2 may, e.g., be achieved by using a mixture of at least two different materials for the bulk heat storage material. By varying concentrations of the at least two different materials in the bulk heat storage material, the heat capacity and/or heat transfer capacity and/or the granularity may be varied along one or more spatial directions such as the spatial direction *̅x̅*̅₂̅ (i.e., the thickness direction of the heat storage material 115/heat-transfer bed 110). For example, the at least two materials may exhibit at least one of different geometries, different topographies, different heat capacities and different heat transfer capacities.

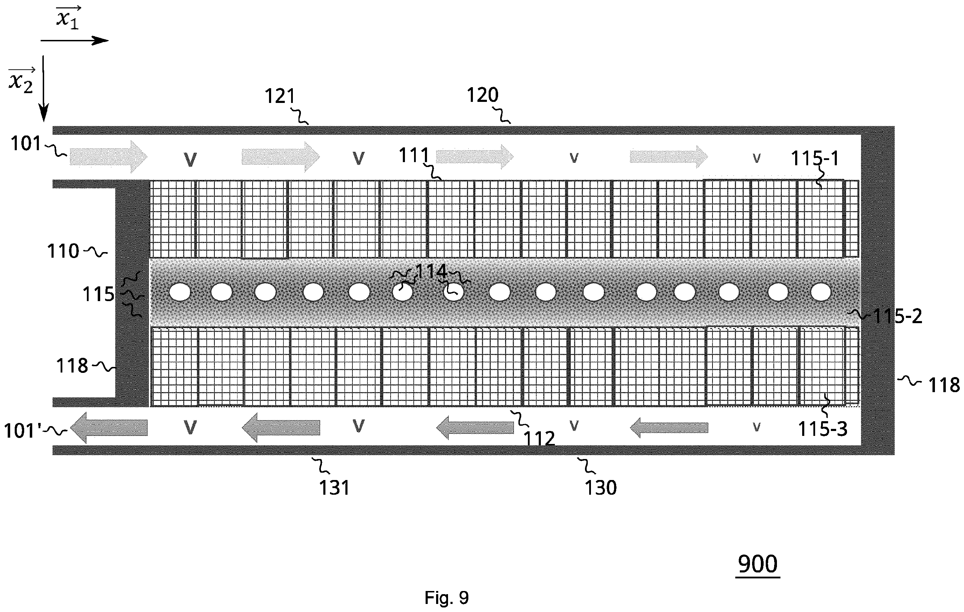

**Fig. 9** schematically illustrates another fluid reactor device 900 during a time period in which the first plenum 120 is configured to supply the fluid 101 to the heat-transfer bed 110. In comparison to the fluid reactor device 800, the fluid reactor device 900 additionally comprises a plurality of hollow bodies 114. The plurality of hollow bodies 114 are arranged in the bulk heat storage material of the second layer 115-2.

Analogously to what is described above with reference to Fig. 2, the plurality of hollow bodies 114 are for accommodating the electrical heater (not illustrated in Fig. 9). The inner volume (i.e., the inside) of the hollow bodies 114 is accessible from the outside of the heat-transfer bed 110. The hollow bodies 114 may each, e.g., be one or more tube arranged (placed) in the bulk heat storage material of the second layer 115-2. At least part of the electrical heater is removably arranged in the hollow bodies 114. For example, one or more electrical sub-heaters of the electrical heater may be placed in the respective hollow body. Arranging at least part of the electrical heater removably in the hollow bodies 114 may allow to easily access and/or remove the electrical heater from the fluid reactor device 900 for inspection, maintenance, etc. In particular, arranging at least part of the electrical heater in the hollow bodies 114 may allow to access and/or remove the electrical heater without removing bulk heat storage material from the heat-transfer bed 110. This not only may simplify inspection, maintenance, etc. of the electrical heater, but also reduce downtimes of the fluid reactor device 900 since the bulk heat storage material need not be removed from the heat-transfer bed 110. Furthermore, arranging at least part of the electrical heater in the hollow bodies 114 may allow to facilitate the installation of the electrical heater.

Other than that, the fluid reactor device 900 is identical to the fluid reactor device 800.

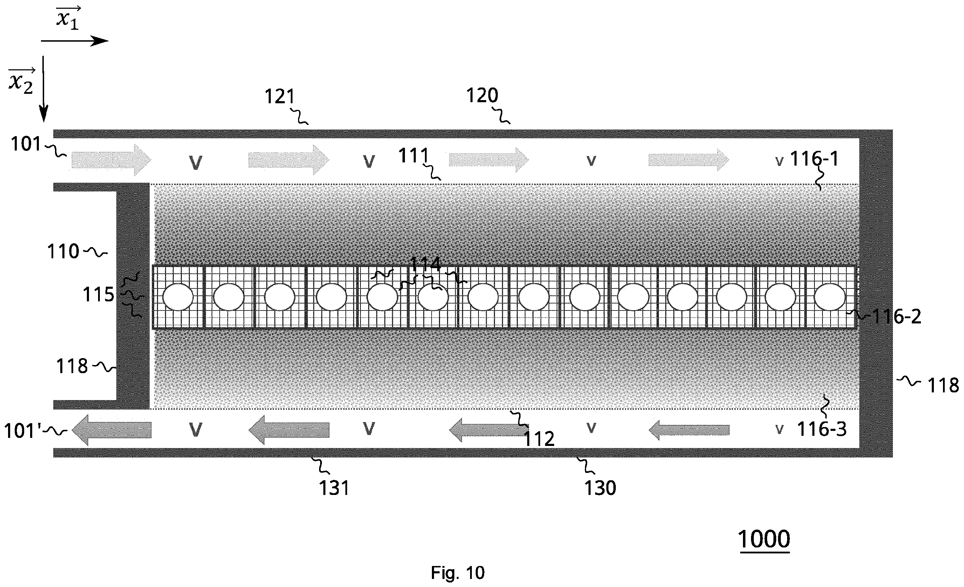

**Fig. 10** schematically illustrates a variation of the fluid reactor device 900. The heat-transfer bed 110 of the fluid reactor device 1000 illustrated in Fig. 10 comprises an inversed sandwich structure compared to the heat-transfer bed 110 of the fluid reactor device 900. Fig. 10 illustrates the fluid reactor device 1000 during a time period in which the first plenum 120 is configured to supply the fluid 101 to the heat-transfer bed 110.

In the example of Fig. 10, the heat storage material again comprises at least a first layer 116-1, a second layer 116-2 and a third layer 116-3 arranged in sequence between the first opening 111 and the second opening 112. However, contrary to the example of Fig. 9, the first layer 116-1 and the third layer 116-3 are formed of bulk heat storage material and the second layer 116-2 is formed of block shaped heat storage material. Such a sandwiched structure of bulk and block shaped heat storage material may be preferred for some applications.

Like in the example of Fig. 9, a plurality of hollow bodies for arranging the electrical heater (not illustrated in Fig. 10) are provided. However, contrary to the example of Fig. 9, the hollow bodies 114 are not provided as one or more tube arranged (placed) in the bulk heat storage material. Rather, recesses in at least part of the block shaped heat storage material in the second layer 115-2 form the plurality of hollow bodies 114. Optionally, one or more tube may be arranged in at least part of the recesses forming the hollow bodies 114 to further protect the electrical heater.

In the example of Fig. 8, the granularity of the bulk heat storage material varies along the spatial direction *̅x̅*̅₂̅, i.e., the thickness direction of the heat storage material 115/heat-transfer bed 110. In each of the first layer 116-1 and the third layer 116-3, the granularity of the bulk heat storage material decreases along the thickness direction of the heat storage material 115/heat-transfer bed 110 from the respective one of the first opening 111 and the second opening 112 toward the center of the heat storage material 115/heat-transfer bed 110. In other words, in each of the first layer 116-1 and the third layer 116-3, the bulk heat storage material exhibits a finer granular size in the outer parts of the respective layer (near the openings 111 and 112) and exhibits a coarser granular size in the central part of the respective. The bulk heat storage material with coarser granularity allows to minimize the pressure drop of the fluid 101 and also the reacted fluid 101', whereas the bulk heat storage material with finer granularity allows to minimize the pressure drop of the fluid 101 and also the reacted fluid 101' while maintaining a high thermal efficiency.

However, it is to be noted that the granularity or any other structural property need not vary in other examples of the present disclosure. In these examples, the granularity of the bulk heat storage material may be (substantially) constant across the first layer 116-1 and/or the third layer 116-3. In other words, the granularity of the bulk heat storage material may (substantially) not be varied across the first layer 116-1 and/or the third layer 116-3.

Optionally, at least one of the heat capacity and the heat transfer capacity of the bulk heat storage material may increase along the thickness direction of the heat storage material 115/heat-transfer bed 110 from each of the first opening 111 and the second opening 112 toward the center of the heat storage material 115/heat-transfer bed 110. In other words, in each of the first layer 116-1 and the third layer 116-3, the heat storage material 115 may exhibit a lower heat capacity and/or heat transfer capacity in the outer parts of the respective layer (near the openings 111 and 112) and exhibit a higher heat capacity and/or heat transfer capacity in the central part of the respective layer. Increasing the heat capacity and/or the heat transfer capacity towards the central part of the respective layer may allow to provide a substantially homogeneous heat storage capability.

The variation of the heat capacity and/or heat transfer capacity and/or the variation of the granularity in the first layer 116-1 and/or the third layer 116-3 may, e.g., be achieved by using a mixture of at least two different materials for the respective bulk heat storage material. By varying concentrations of the at least two different materials in the respective bulk heat storage material, the heat capacity and/or heat transfer capacity and/or the granularity may be varied along one or more spatial directions such as the spatial direction *̅x̅*̅₂̅ (i.e., the thickness direction of the heat storage material 115/heat-transfer bed 110). For example, the at least two materials may exhibit at least one of different geometries, different topographies, different heat capacities and different heat transfer capacities.

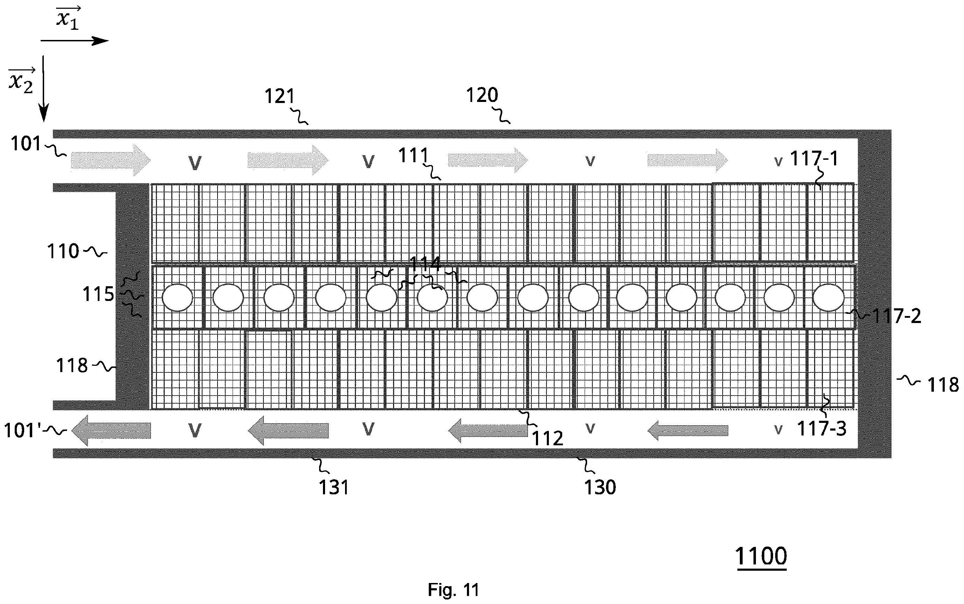

The heat-transfer bed 110 of the fluid reactor device 1100 illustrated in Fig. 11 comprises exclusively block shaped heat storage material. Fig. 11 illustrates the fluid reactor device 1100 during a time period in which the first plenum 120 is configured to supply the fluid 101 to the heat-transfer bed 110.

In the example of Fig. 11, the heat storage material 115 comprises at least a first layer 117-1, a second layer 117-2 and a third layer 117-3 arranged in sequence between the first opening 111 and the second opening 112. Each of the first, the second and the third layer is formed of block shaped heat storage material. The second layer 117-2 is formed of different block shaped heat storage material than the first and the third layer 117-1 and 117-3. In other words, the layers 117-1, 117-2 and 117-3 of block shaped heat storage material are not identical to each other.

The extension of the second layer 117-2 is different from the respective extension of the first layer 117-1 and the third layer 117-3 along the thickness direction of the heat storage material 115/heat-transfer bed 110 (equal to spatial direction *̅x̅*̅₂̅). Furthermore, recesses are provided in at least part of the block shaped heat storage material in the second layer 117-2 to form a plurality of hollow bodies 114 for arranging the electrical heater (not illustrated in Fig. 11). Optionally, one or more tube may be arranged in at least part of the recesses forming the hollow bodies 114 to further protect the electrical heater.

The block shaped heat storage material of the second layer 117-2 may additionally or alternatively differ from the block shaped heat storage material of the first layer 117-1 and the third layer 117-3 by one or more other structural or thermal properties. For example, the block shaped heat storage material of the second layer 117-2 may exhibit different dimensions (i.e., in another dimension than illustrated in Fig. 11) or different dimensions of channels formed in the blocks than the block shaped heat storage material of the first layer 117-1 and the third layer 117-3. Additionally or alternatively, the block shaped heat storage material of the second layer 117-2 may exhibit at least one different thermal property than the block shaped heat storage material of the first layer 117-1 and the third layer 117-3 (e.g., different heat capacities and/or different heat transfer capacities). The block shaped heat storage material of the second layer 117-2 may, e.g., be made of different material(s) than the block shaped heat storage material of the first layer 117-1 and the third layer 117-3. In other words, the chemical composition of the block shaped heat storage material of the second layer 117-2 may be different from that of the block shaped heat storage material of the first layer 117-1 and the third layer 117-3. Using a different block shaped heat storage material for the second layer 117-2 than for the first layer 117-1 and the third layer 117-3 allows to vary at least one structural or thermal property of the heat storage material along at least one spatial direction. This may allow to achieve one or more of the above described beneficial effects or other beneficial effects.

As illustrated in Fig. 11, the first layer 117-1 may be formed of identical block shaped heat storage material as the third layer 117-3 to provide a symmetric structure of the heat storage material 115. Alternatively, the first layer 117-1 may be formed of different shaped heat storage material than the third layer 117-3 to provide an asymmetric structure of the heat storage material 115.

Structural and/or thermal properties may not only vary between the different layers 117-1, 117-2 and 117-3, but also within one or more of the layers. In other words, in at least one of the first layer 117-1, the second layer 117-2 and the third layer 117-3, at least one of a structural property and a thermal property of the block shaped heat storage material varies along at least one spatial direction. Varying at least one of a structural property and a thermal property of the block shaped heat storage material in at least one of the layers 117-1, 117-2 and 117-3 allows to vary at least one structural or thermal property of the heat storage material 115 along at least one spatial direction in order to achieve one or more of the above described beneficial effects. For example, structural properties such as block dimensions or dimensions of channels formed in the blocks may vary along one or more spatial directions within one or more of the layers 117-1, 117-2 and 117-3. Additionally or alternatively, the blocks within one or more of the layers 117-1, 117-2 and 117-3 may exhibit different thermal properties such as different heat capacities and/or different heat transfer capacities. Further additionally or alternatively, the blocks within one or more of the layers 117-1, 117-2 and 117-3 may exhibit chemical compositions.

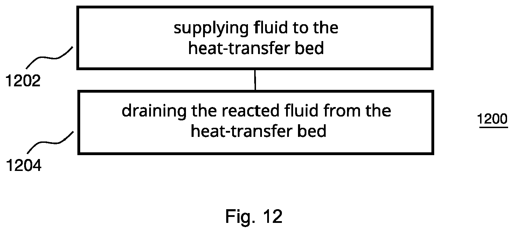

For further illustrating the proposed architecture for fluid processing, **Fig. 12** illustrates a flowchart of a method 1200 for operating a fluid reactor device according to the present disclosure. The method 1200 comprises supplying 1202 fluid to the heat-transfer bed such that the fluid heats up and reacts while flowing through the heat storage material.

Similar to what is described above, the method 1200 may allow for fluid reaction processing with increased efficiency as the variation of the at least one structural or thermal property of the heat storage material along at least one spatial direction allows to more efficiently use the heat stored in the heat-transfer bed.

More details and aspects of the method 1200 are explained in connection with the proposed technique or one or more example described above (e.g., Figs. 1 to 11). The method 1200 may comprise one or more additional optional feature corresponding to one or more aspect of the proposed technique, or one or more example described above. For example, supplying 1202 the fluid to the heat-transfer bed may comprise supplying the fluid to the heat-transfer bed alternatingly through a first plenum and a second plenum of the fluid reactor device such that the fluid heats up and reacts while flowing through the heat storage material. Additionally, during a time period in which one of the first plenum and the second plenum supplies the fluid to the heat-transfer bed, the method 1200 may further comprise draining the reacted fluid from the heat-transfer bed through the other one of the first plenum and the second plenum.

The aspects and features described in relation to a particular one of the previous examples may also be combined with one or more of the further examples to replace an identical or similar feature of that further example or to additionally introduce the features into the further example.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A fluid reactor device (100), in particular a fluid purification device, comprising:
a heat-transfer bed (110) comprising a first opening (111), a second opening (112) and heat storage material (115) arranged between the first opening (111) and the second opening (112), wherein the heat storage material (115) is configured to heat fluid (101) flowing through the heat storage material (115) such that the fluid (101) heats up and reacts while flowing through the heat storage material (115), and wherein at least one structural or thermal property of at least one of the heat-transfer bed (110) and the heat storage material (115) varies along at least one spatial direction.

2. The fluid reactor device (100) of claim 1, wherein at least one of the following properties varies along at least one spatial direction: a structure of the heat storage material (115), a porosity of at least one of the heat-transfer bed (110) and the heat storage material (115), a geometry of the heat storage material (115), a topography of the heat storage material (115), a heat capacity of the heat storage material (115) and a heat transfer capacity of the heat storage material (115).

3. The fluid reactor device (100) of claim 1 or claim 2, wherein the heat storage material (115) comprises at least one layer formed of block shaped heat storage material and at least one layer formed of bulk heat storage material.

4. The fluid reactor device (100) of any one of claims 1 to 3, wherein the heat storage material (115) comprises at least a first layer (115-1), a second layer (115-2) and a third layer (115-3) arranged in sequence between the first opening (111) and the second opening (112), and wherein the first layer (115-1) and the third layer (115-3) are formed of block shaped heat storage material and the second layer (115-2) is formed of bulk heat storage material.

5. The fluid reactor device (100) of claim 4, wherein extensions of the first layer (115-1) and the third layer (115-3) are different from each other along a thickness direction of the heat storage material (115), the thickness direction extending from the first opening (111) to the second opening (112).

6. The fluid reactor device (100) of any one of claims 1 to 3, wherein the heat storage material (115) comprises at least a first layer (116-1), a second layer (116-2) and a third layer (116-3) arranged in sequence between the first opening (111) and the second opening (112), and wherein the first layer (116-1) and the third layer (116-3) are formed of bulk heat storage material and the second layer (116-2) is formed of block shaped heat storage material.

7. The fluid reactor device (100) of any one of claims 3 to 6, wherein the bulk heat storage material comprises a mixture of at least two different materials, and wherein concentrations of the at least two different materials in the bulk heat storage material vary along at least one spatial direction.

8. The fluid reactor device (100) of claim 7, wherein the at least two materials exhibit at least one of different geometries, different topographies, different heat capacities and different heat transfer capacities.

9. The fluid reactor device (100) of any one of claims 3 to 8, wherein a granularity of the bulk heat storage material varies along at least one spatial direction.

10. The fluid reactor device (100) of any one of claims 3 to 9, wherein at least one of a structural property and a thermal property of the block shaped heat storage material varies along at least one spatial direction.

11. The fluid reactor device (100) of any one of claims 1 to 3, wherein the heat storage material (115) comprises at least a first layer (117-1), a second layer (117-2) and a third layer (117-3) arranged in sequence between the first opening (111) and the second opening (112), wherein each of the first, the second and the third layer (117-1, 117-2, 117-3) is formed of block shaped heat storage material, and wherein the second layer (117-2) is formed of different block shaped heat storage material than the first and the third layer (117-1, 117-3).

12. The fluid reactor device (100) of claim 11, wherein, in at least one of the first, the second and the third layer (117-1, 117-2, 117-3), at least one of a structural property and a thermal property of the block shaped heat storage material varies along at least one spatial direction.

13. The fluid reactor device (100) of claim 1 or claim 2, wherein the heat storage material (115) is bulk heat storage material.

14. The fluid reactor device (100) of claim 13, wherein the granularity of the heat storage material (115) decreases along a thickness direction of the heat storage material (115) from each of the first opening (111) and the second opening (112) toward a center of the heat storage material (115), wherein the thickness direction of the heat storage material (115) extends from the first opening (111) to the second opening (112).

15. The fluid reactor device (100) of claim 13 or claim 14, wherein at least one of the heat capacity and the heat transfer capacity of the heat storage material (115) increases along a thickness direction of the heat storage material (115) from each of the first opening (111) and the second opening (112) toward a center of the heat storage material (115), wherein the thickness direction of the heat storage material (115) extends from the first opening (111) to the second opening (112).

16. The fluid reactor device (100) of claim 13, wherein the granularity of the heat storage material (115) increases along a thickness direction of the heat storage material (115) from each of the first opening (111) and the second opening (112) toward a center of the heat storage material (115), wherein the thickness direction of the heat storage material (115) extends from the first opening (111) to the second opening (112).

17. The fluid reactor device (100) of claim 13 or claim 16, wherein at least one of the heat capacity and the heat transfer capacity of the heat storage material (115) decreases along a thickness direction of the heat storage material (115) from each of the first opening (111) and the second opening (112) toward a center of the heat storage material (115), wherein the thickness direction of the heat storage material (115) extends from the first opening (111) to the second opening (112).

18. The fluid reactor device (100) of any one of claims 13 to 17, further comprising a first plenum fluidly coupled to the first opening (111) of the heat-transfer bed (110), wherein the first plenum extends lengthwise along a first spatial direction such that fluid (101) travels through the first plenum along the first spatial direction during a time period in which the first plenum is configured to supply the fluid (101) to the heat-transfer bed (110), and wherein the granularity of the heat storage material (115) increases along the first spatial direction.

19. The fluid reactor device (100) of any one of claims 13 to 18, further comprising a first plenum (120) fluidly coupled to the first opening (111) of the heat-transfer bed (110), wherein the first plenum (120) extends lengthwise along a first spatial direction such that fluid (101) travels through the first plenum (120) along the first spatial direction during a time period in which the first plenum (120) is configured to supply the fluid (101) to the heat-transfer bed (110), and wherein at least one of the heat capacity and the heat transfer capacity of the heat storage material (115) increases along the first spatial direction.

20. The fluid reactor device (100) of claim 13, further comprising a first plenum (120) fluidly coupled to the first opening (111) of the heat-transfer bed (110), wherein at least one of the heat capacity and the heat transfer capacity of the heat storage material (115) decreases along a thickness direction of the heat storage material (115) from each of the first opening (111) and the second opening (112) toward a center of the heat storage material (115), wherein the thickness direction of the heat storage material (115) extends from the first opening (111) to the second opening (112), wherein the first plenum (120) extends lengthwise along a first spatial direction such that the travels through the first plenum (120) along the first spatial direction during a time period in which the first plenum (120) is configured to supply the fluid (101) to the heat-transfer bed (110), and wherein at least one of the heat capacity and the heat transfer capacity of the heat storage material (115) decreases along the first spatial direction.

21. The fluid reactor device (100) of any one of claims 15, 17, 19 and 20, wherein the heat storage material (115) comprises a mixture of at least two different materials exhibiting at least one of different heat capacities and different heat transfer capacities, and wherein concentrations of the at least two different materials in the heat storage material (115) vary.

22. The fluid reactor device (100) of any one of claims 1 to 21, further comprising:
a first plenum (120) fluidly coupled to the first opening (111) of the heat-transfer bed (110); and
a second plenum (130) fluidly coupled to the second opening (112) of the heat-transfer bed (110),
wherein the first plenum (120) and the second plenum (130) are configured to alternatingly supply the fluid (101) to the heat-transfer bed (110) such that the fluid (101) heats up and reacts while flowing through the heat storage material (115), and wherein, during a time period in which one of the first plenum (120) and the second plenum (130) is configured to supply the fluid (101) to the heat-transfer bed (110), the other one of the first plenum (120) and the second plenum (130) is configured to drain the reacted fluid (101) from the heat-transfer bed (110).

23. A method (1200) for operating a fluid reactor device according to any one of claims 1 to 22, the method (1200) comprising:
supplying (1202) fluid to the heat-transfer bed such that the fluid heats up and reacts while flowing through the heat storage material.
